# EUROPEAN PATENT SPECIFICATION

(11) **EP 0 884 211 B1**
(45) Date of publication and mention of the grant of the patent: **04.10.2001**
(21) Application number: 98110941.6
(22) Date of filing: 15.06.1998
(51) Int. Cl.: B60K 37/02, G01D 11/26

(54) **Integrated assembly of an instrument panel fascia and a dashboard of a vehicle**
Baueinheit aus Instrumententafel-Einfassung und Armaturenbrett eines Fahrzeuges
Ensemble d'habillage d'un tableau indicateur et d'un tableau de bord d'un véhicule

(30) Priority: 13.06.1997 IT TO970516
(43) Date of publication of application: 16.12.1998
(73) Proprietor: MAGNETI MARELLI S.p.A., 20145 Milano (IT)
(72) Inventor: Guirauton, Pascal, 95370 Montigny les Cormeilles (FR); Fallini, Andrea, 20025 Legnano (IT)
(74) Representative: Franzolin, Luigi

(56) References cited:
- EP-A- 0 769 405
- DE-A- 4 227 579
- DE-A- 4 318 011
- FR-A- 2 740 549

## Description

The present invention relates to an integrated assembly of an instrument panel fascia and a dashboard of a vehicle.

In many vehicles, the dashboard (containing the on-board instruments) is housed at the front in an appropriate housing obtained in the instrument panel fascia. The connection between the dashboard and the instrument panel fascia provides for contact over the entire profile or only part thereof.

As a result of the manufacturing tolerances arising from production processes, there is often play between the profiles of the dashboard and the fascia which may give rise, when the vehicle is in motion, to vibrations and creaks which are difficult to eliminate.

It is known, in order to reduce these problems, to insert felt pads between the dashboard and the fascia; however, this solution entails difficulties during the assembly stage and therefore increases production costs.

Further problems arise from the connection of the transparent screen disposed to close the dashboard to the body of the dashboard itself. In this case as well, play arising from manufacturing tolerances and the forces generated by the motion of the vehicle bring about creaking noises.

The aim of the present invention is to provide an integrated assembly of an instrument panel fascia and a dashboard that is free from the drawbacks described above.

The object of the present invention is in particular to provide an integrated assembly of an instrument panel fascia and a dashboard of a vehicle in which the connection between the dashboard and the instrument panel fascia and between the transparent screen and the body of the dashboard is free from play and in which there is no creaking or noise arising from vibrations or relative displacements of the various parts of the assembly.

The present invention relates to an integrated assembly of an instrument panel fascia and a dashboard of a vehicle, in particular an automobile vehicle, as claimed in claim 1

Further characteristic features and advantages of the invention will be set out in the following description of some non-limiting embodiments thereof, made with reference to the accompanying drawings, in which:
Fig. 1 is a diagrammatic representation of an integrated assembly of an instrument panel fascia and a dashboard of the invention;
Fig. 2 is a cross-section view along the line II-II of the assembly of Fig. 1;
Fig. 3 shows a possible variant of the assembly of Fig. 1.

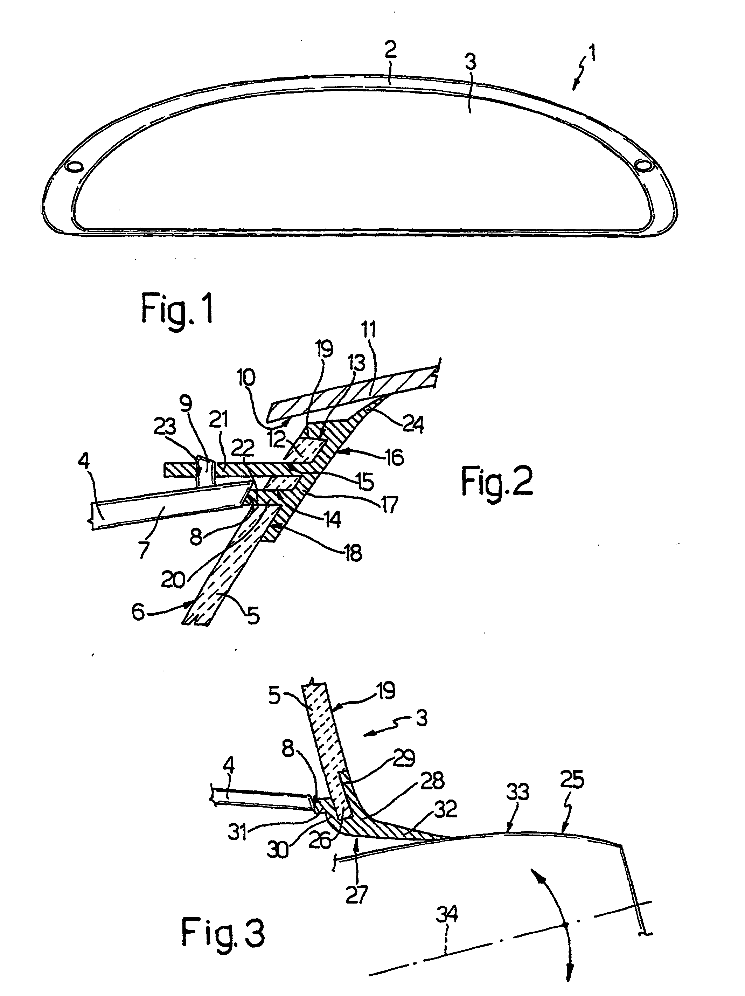

In Figs. 1 and 2, an integrated assembly of an instrument panel fascia 2 and a dashboard 3 of an automobile vehicle (not shown) is shown by 1.

The instrument panel fascia 2 of known type is formed, for instance, from a rigid polymer material and may be of any shape; in the example shown, the instrument panel fascia 2 has, viewed from the front, a substantially elliptical shape with one substantially rectilinear side.

The dashboard 3, substantially known, comprises a concave main body 4 (Fig. 2) having, when viewed from the front, a shape similar to that of the fascia 2 and is made, for instance, from a rigid polymer material (but not necessarily from the same material as the fascia 2). The dashboard 3 also comprises a transparent protection member 5 secured, as will be described below, to the main body 4. The main body 4 bears a plurality of instruments (not shown), for instance, speedometer, revolution counter, etc., facing a first inner surface 6 of the transparent member 5.

The main body 4 has a peripheral annular portion 7 bounded by an edge 8 disposed to face the first surface 6 of the transparent member 5. The main body 4 further comprises a plurality of rectilinear projections 9 disposed on the outer surface of the peripheral annular portion 7.

The dashboard 3 is housed in a housing 10 obtained in the fascia 2 and is bounded, at least partially, by a wall 11 which may have different shapes.

The peripheral dimensions of the transparent member 5 are greater than those of the body 4 via its peripheral portion 12 that projects laterally in a snaplocking manner from the body 4 and has its edge 13 disposed to face the wall 11. Moreover, the peripheral portion 12 is provided with a plurality of through apertures 14, 15, for instance circular, disposed adjacent and parallel in pairs; the through apertures 14 in particular face the edge 8 of the main body 4 while the through apertures 15 are each disposed between a respective aperture 14 and the edge 13 of the peripheral portion 12.

The peripheral portion 12 is coupled to an annular frame 16 made from an elastomer material and adapted to provide, in the manner described below, the connection between the transparent member 5 and the main body 4, as well as the connection of the dashboard 2 to the instrument panel fascia 3.

The frame 16 comprises an annular and substantially plane main portion 17 disposed adjacent to a second outer surface 18 of the transparent member 5 opposite the surface 6. The frame 16 further comprises a protective portion 19 disposed to cover the edge 13 and terminating edgewise with respect to the surface 6.

The frame 16 further comprises pairs of elastic connection members 20, 21 made rigid with the main portion 17 and extending transversally to the main portion 17 through the apertures 14, 15 in order to provide a stable connection between the transparent member 5 and the main body 4. In particular, each elastic member 20 engages (without play) a respective aperture 14 and has an end portion 22 which projects from the surface 6 and is disposed in abutment against the edge 8 thereby preventing direct contact between the transparent member 5 and the main body 4. Moreover, each coupling member 21 engages (without play) a respective aperture 15 and has a substantial proportion of its length projecting from the surface 6. Each coupling member 21 is longer than the member 20 of the same pair and has a through hole 23 provided at its free end. The hole 23 is engaged, in turn, by a respective projection 9 to form a connection between the transparent member 5 and the main body 4 via the frame 16.

The frame 16 lastly comprises a peripheral annular lip 24 with a substantially triangular cross-section extending from the protective portion 19 and adapted to exert a pressure on the wall 11 in order to provide an elastic connection between the instrument panel fascia 2 and the dashboard 3 able elastically to absorb vibrations or forces arising during the motion of the vehicle.

In the variant shown in Fig 3, the lower portion of the instrument panel fascia 3 is mounted directly on the steering column cover of the vehicle, shown by 25. In this embodiment, the transparent member 5 has a peripheral portion 26 of smaller cross-section.

The transparent member 5 is connected to an annular frame 27, whose shape differs from that of the frame 16, having a connection portion 28 of substantially U-shaped cross-section housing the peripheral portion 26 in its recess. In particular, the peripheral portion 26 is disposed between a first arm 29 and a second arm 30 of the connection portion 28; the first arm 29 is disposed edgewise with respect to the surface 19, while the second arm 30 is smaller in length than the first arm 29 and has a transverse annular projection 31 adapted to be disposed in abutment against the edge 8 of the main body 4.

The annular frame 3 lastly comprises a lip 32 rigid with the connection portion 28 and extending towards a wall 33 of the steering column cover 25. The elasticity of the lip 32 ensures that the annular frame is correctly borne on the steering column cover 25 even when the steering column, of which only the main axis 34 is shown, is inclined differently.

The integrated assembly of the present invention has the following advantages.

The connections between the dashboard 3 and the instrument panel fascia 2 and between the transparent member 5 and the main body 4 of the dashboard 3 are provided, without play and in a stable manner, by the frame 16 or, in the variant shown in Fig. 3, by the frame 30. The elastic nature of the frame 16 and the frame 30 makes it possible, moreover, to absorb relative displacements and vibrations, eliminating creaks and other noises.

In particular, the connection between the transparent member 5 and the main body 4 is particularly stable and secure as well as simple and compact. The simplicity of this connection makes it possible to reduce the time required for and the cost of installation of this connection.

Lastly, as described above and illustrated in Fig. 3, it is possible to provide a direct connection between the instrument panel fascia 3 and the steering column cover 25, eliminating that part of the fascia normally interposed between the two. This connection, as mentioned above, adapts, as a result of the flexibility of the lip 32, to any inclination of the steering column.

It is evident that modifications and variations may be made to the integrated assembly as described and illustrated without thereby departing from the scope of protection of the present invention.

## Claims

1. An integrated assembly (1) of an instrument panel fascia (2) and a dashboard (3) of a vehicle, in particular an automobile vehicle, of the type in which the dashboard (3) comprises a main body (4) which acts as a support for the vehicle instrumentation and a transparent member (5) for covering this main body (4), this transparent member (5) having an inner surface (6) facing towards the main body (4), an outer surface (18) facing away from the former surface and a peripheral edge (13), in which the main body (4) comprised by the dashboard (3) is housed in a housing (10) obtained at least partially in the instrument panel fascia (2) and is bounded, at least partially, by a wall (11) of this instrument panel fascia (2), and in which this assembly (1) further comprises an annular frame (16; 27) of elastic material interposed between the wall (11) and the main body (4) comprised by the dashboard (3) **characterised in that** the frame (16; 27) is rigid with the transparent member (5) and comprises first elastic connection means (9, 20, 21; 31) for the connection of the transparent member (5) to the main body (4) and second elastic connection means (24; 32) for the connection of the transparent member (5) to the wall (11).

2. An assembly as claimed in claim 1, **characterised in that** the main body (4) has a support portion (7) adapted to support the transparent member (5) and having a support edge (8) disposed to face this transparent member (5) and **in that** the first elastic connection means (9, 20, 21; 31) comprise elastic spacer means (20; 31) interposed at least partially between the support edge (8) and the transparent member (5) to prevent direct contact between the main body (4) and the transparent member (5).

3. An assembly as claimed in claim 2, **characterised in that** the transparent member (5) has first through apertures (14) facing the support edge (8), **in that** the frame (16) comprises a main portion (17) disposed adjacent to the second surface (18) of the transparent member (5) and **in that** the elastic spacer means (20; 31) comprise first elastic members (20) rigid with the main portion (17) and passing through the first through apertures (14) in order to abut against the support edge (8).

4. An assembly as claimed in claim 2 or 3, **characterised in that** the first elastic connection means (9, 20, 21; 31) further comprise hooking members (9) borne by the support portion (7) and adapted to be coupled to the frame (16).

5. An assembly as claimed in claim 4, **characterised in that** the first elastic connection means (9, 20, 21; 34) further comprise second elastic members (21) rigid with the main portion (17) and passing through the second through apertures (15) in order to cooperate with the hooking members (9).

6. An assembly as claimed in claim 5, **characterised in that** the hooking members (9) comprise projections (9) disposed on the outer surface of the main body (4) and **in that** these second elastic members (21) have though holes (23) adapted to be engaged by these projections (9).

7. An assembly as claimed in any one of the preceding claims, **characterised in that** the frame (16) comprises a protective portion (19) disposed to cover the peripheral edge (13) of the transparent member (5).

8. An assembly as claimed in any one of the preceding claims, **characterised in that** the transparent member (5) has a peripheral portion (26) of reduced section and **in that** the frame (27) at least partially surrounds this peripheral portion (26).

9. An assembly as claimed in any one of the preceding claims, **characterised in that** the second elastic means (24; 32) comprise an elastic lip (24) adapted to cooperate elastically with the wall (8).

10. An assembly as claimed in any one of the preceding claims, **characterised in that** the housing (7) is bounded partially by a steering column cover (25) and **in that** the second elastic means (24; 32) comprise a lip (32) adapted to cooperate elastically with the wall (11) over a part of its extension and with the steering column cover (25) over the remaining part of its extension.

## Patentansprüche

1. Baueinheit (1) aus einer Instrumententafel-Einfassung (2) und einem Armaturenbrett (3) eines Fahrzeugs, insbesondere eines Kraftfahrzeugs, bei welchem das Armaturenbrett (3) einen Grundkörper (4), welcher als Träger für die Fahrzeuginstrumentation dient, und ein transparentes Bauelement (5) zur Abdeckung des Grundkörpers (4) aufweist, wobei das transparente Abdeckelement (5) eine zum Grundkörper (4) weisende Innenfläche (6) und eine von der vorerwähnten Fläche wegweisende Außenfläche (18) sowie eine umlaufende Randkante (13) aufweist und der im Armaturenbrett (3) vorgesehene Grundkörper (4) in einem Gehäuse (10) angeordnet ist, welches zumindest teilweise von der Instrumententafel-Einfassung (2) gebildet und zumindest teilweise von einer Wand (11) der Instrumententafel-Einfassung (2) begrenzt wird, und wobei die Baueinheit außerdem einen umlaufenden Rahmen (16; 27) aus elastischem Material aufweist, welcher zwischen der Wand (11) und dem Grundkörper (4) der Armaturentafel (3) eingesetzt ist,
**dadurch gekennzeichnet,**
**dass** der Rahmen (16; 27) starr mit dem transparenten Abdeckelement (5) verbunden ist und erste elastische Verbindungselemente (9, 20, 21; 31) zur Verbindung des transparenten Bauteils (5) mit dem Grundkörper (4) und zweite elastische Verbindungselemente (24; 32) zur Verbindung des transparenten Abdeckelements (5) mit der Wand (11) aufweist.

2. Baueinheit nach Anspruch 1, **dadurch gekennzeichnet, dass** der Grundkörper (4) einen Halterungsabschnitt (7) für die Halterung des transparenten Abdeckelements (5) mit einer zum transparenten Abdeckelement (5) weisenden halternden Randkante (8) aufweist, welche (5), und **dass** die ersten elastischen Verbindungselemente (9, 20, 21; 31) elastische Abstandselemente (20; 31) aufweisen, welche zumindest teilweise zwischen der Randkante (8) und dem transparenten Abdeckelement (5) angeordnet sind und so direkten Kontakt zwischen dem Grundkörper (4) und dem transparenten Abdeckelement (5) vermeiden.

3. Baueinheit nach Anspruch 2, **dadurch gekennzeichnet, dass** das transparente Abdeckelement (5) mit ersten Durchgangsöffnungen (14) versehen ist, welche zur halternden Randkante (8) gerichtet sind, **dass** der Rahmen (16) einen neben der zweiten Flachseite (18) des transparenten Abdeckelements (5) angeordneten Hauptteil (17) aufweist, und **dass** die elastischen Abdeckelemente (20, 31) erste, starr am Hauptabschnitt (17) vorgesehene erste elastische Abstandselemente (20) aufweisen, welche durch die ersten Durchgangsöffnungen (14) hindurchtreten und sich an der halternden Randkante (8) anlegen.

4. Baueinheit nach Anspruch 2 oder 3, **dadurch gekennzeichnet, dass** die ersten elastischen Verbindungselemente (9, 20, 21; 31) erste Einhängelemente (9) aufweisen, welche vom halternden Randbereich (7) ausgehen und mit dem Rah- men (16) verbindbar sind.

5. Baueinheit nach Anspruch 4, **dadurch gekennzeichnet, dass** die ersten elastischen Verbindungselemente (9, 20, 21; 34) zweite elastische Verbindungselemente (21) aufweisen, welche starr mit dem Hauptteil (17) verbunden sind und durch die zweiten Durchgangsöffnungen (15) hindurchtreten, um mit den Einhängeelementen (9) zusammenzuwirken.

6. Baueinheit nach Anspruch 5, **dadurch gekennzeichnet, dass** die Einhängeelemente Vorsprünge (9) aufweisen, welche auf der äußeren Flachseite des Grundkörpers (4) vorgesehen sind, und **dass** die zweiten elastischen Verbindungselemente (21) mit Durchgangsöffnungen (23) versehen sind, in welche die Vorsprünge (9) zum Eingriff bringbar sind.

7. Baueinheit nach einem der vorausgehenden Ansprüche, **dadurch gekennzeichnet, dass** der Rahmen (16) einen Abdeckabschnitt (19) aufweist, welcher die Randkante (13) des transparenten Abdeckelements (5) abdeckt.

8. Baueinheit nach einem der vorausgehenden Ansprüche, **dadurch gekennzeichnet, dass** das transparente Abdeckelement (5) einen Randbereich (26) mit im Querschnitt verringerter Dicke aufweist, und **dass** der Rahmen (27) diesen Randbereich (26) zumindest teilweise übergreift.

9. Baueinheit nach einem der vorausgehenden Ansprüche, **dadurch gekennzeichnet, dass** die zweiten elastischen Verbindungselemente (24; 32) eine elastische Lippe (24) aufweisen, welche zur elastischen Anlage an der Wand (11) geeignet ausgebildet ist.

10. Baueinheit nach einem der vorausgehenden Ansprüche, **dadurch gekennzeichnet, dass** das Gehäuse (10) teilweise von einer Verkleidung (25) der Längssäule begrenzt ist, und **dass** die zweiten elastischen Verbindungsmittel (24; 32) eine Lippe (32) aufweisen, welche sich über einen Teil ihrer Erstreckung elastisch an der Wand (11) und über den verbleibenden Teil ihrer Erstreckung an der Verkleidung (25) der Längssäule anzulegen vermag.

## Revendications

1. Ensemble intégré (1) constitué d'un habillage de tableau d'instruments (2) et d'un tableau de bord (3) d'un véhicule, en particulier un véhicule automobile, du type dans lequel le tableau de bord (3) comporte un corps principal (4) qui agit comme support des instruments du véhicule, et un élément transparent (5) pour recouvrir ce corps principal (4), cet élément transparent (5) ayant une surface intérieure (6) dirigée vers le corps principal (4), une surface extérieure (18) dirigée à l'opposé de la première surface et un bord périphérique (13), dans lequel le corps principal (4) constitué par le tableau de bord (3) est reçu dans un boîtier (10) obtenu au moins partiellement dans l'habillage de tableau d'instruments (2) et est délimité, au moins partiellement, par une paroi (11) de cet habillage de tableau d'instruments (2), et dans lequel cet ensemble (1) comporte de plus un cadre annulaire (16 ; 27) constitué d'un matériau élastique interposé entre la paroi (11) et le corps principal (4) constitué par le tableau de bord (3), **caractérisé en ce que** le cadre (16 ; 27) est rigide avec l'élément transparent (5), et comporte des premiers moyens de connexion élastiques (9, 20, 21 ; 31) destinés à connecter l'élément transparent (5) au corps principal (4), et des seconds moyens de connexion élastiques (24 ; 32) destinés à connecter l'élément transparent (5) à la paroi (11).

2. Ensemble selon la revendication 1, **caractérisé en ce que** le corps principal (4) a une partie de support (7) adaptée pour supporter l'élément transparent (5), et ayant un bord de support (8) disposé pour être en vis-à-vis de cet élément transparent (5), et **en ce que** les premiers moyens de connexion élastiques (9, 20, 21 ; 31) comportent des premiers moyens formant intercalaire élastique (20 ; 31) interposés au moins partiellement entre le bord de support (8) et l'élément transparent (5) pour empêcher un contact direct entre le corps principal (4) et l'élément transparent (5).

3. Ensemble selon la revendication 2, **caractérisé en ce que** l'élément transparent (5) a des premières ouvertures traversantes (14) dirigée vers le bord de support (8), **en ce que** le cadre (16) comporte une partie principale (17) disposée adjacente à la seconde surface (18) de l'élément transparent (5), et **en ce que** les moyens formant intercalaire élastique (20 ; 31) comportent des premiers éléments élastiques (20) en un seul bloc avec la partie principale (17), et passant à travers les premières ouvertures traversantes (14) pour venir en butée contre le bord de support (8).

4. Ensemble selon la revendication 2 ou 3, **caractérisé en ce que** les premiers moyens de connexion élastiques (9, 20, 21 ; 31) comportent de plus des moyens d'accrochage (9) portés par la partie de support (7), et adaptés pour être accouplés au cadre (16).

5. Ensemble selon la revendication 4, **caractérisé en ce que** les premiers moyens de connexion élastiques (9, 20, 21 ; 31) comportent de plus des seconds éléments élastiques (21) en un seul bloc avec la partie principale (17), et passant à travers les secondes ouvertures traversantes (15) pour coopérer avec les éléments d'accrochage (9).

6. Ensemble selon la revendication 5, **caractérisé en ce que** les moyens d'accrochage (9) comportent des saillies (9) disposées sur la surface extérieure du corps principal (4), et **en ce que** ces seconds éléments élastiques (21) ont des trous traversants (23) adaptés pour venir en prise avec ces saillies (9).

7. Ensemble selon l'une quelconque des revendications précédentes, **caractérisé en ce que** le cadre (16) comporte une partie de protection ( 19) disposée pour recouvrir le bord périphérique (13) de l'élément transparent (5).

8. Ensemble selon l'une quelconque des revendications précédentes, **caractérisé en ce que** l'élément transparent (5) a une partie périphérique (26) ayant une coupe réduite, et **en ce que** le cadre (27) entoure au moins partiellement cette partie périphérique (26).

9. Ensemble selon l'une quelconque des revendications précédentes, **caractérisé en ce que** les seconds moyens élastiques **(24 ; 32)** comportent une lèvre élastique **(24)** adaptée pour coopérer de manière élastique avec la paroi **(8).**

10. Ensemble selon l'une quelconque des revendications précédentes, **caractérisé en ce que** le boîtier (7) est délimité partiellement par un recouvrement de colonne de direction **(25),** et **en ce que** les seconds moyens élastiques **(24 ; 32)** comportent une lèvre **(32)** adaptée pour coopérer de manière élastique avec la paroi **(11)** sur une partie de son étendue, et avec le recouvrement de colonne de direction **(25)** sur la partie restante de son étendue.
